**Europäisches Patentamt**

**European Patent Office**

**Office européen des brevets**

(19)

(11) Veröffentlichungsnummer: **0 265 706**
**B1**

# (12) EUROPÄISCHE PATENTSCHRIFT

(45) Veröffentlichungstag der Patentschrift:
**28.02.90**

(21) Anmeldenummer: **87114384.8**

(22) Anmeldetag: **02.10.87**

(51) Int. Cl.⁴: **C08L 15/00**, C08C 19/02
// (C08L15/00, 15:00)

(54) **Verfahren zur Herstellung von teilhydrierten Nitrilkautschuken.**

(30) Priorität: **14.10.86 DE 3634882**

(43) Veröffentlichungstag der Anmeldung:
**04.05.88 Patentblatt 88/18**

(45) Bekanntmachung des Hinweises auf die Patenterteilung:
**28.02.90 Patentblatt 90/9**

(84) Benannte Vertragsstaaten:
**DE FR GB IT NL**

(56) Entgegenhaltungen:
**EP-A- 0 174 551**

(73) Patentinhaber: **BAYER AG,
D-5090 Leverkusen 1 Bayerwerk(DE)**

(72) Erfinder: **Hohn, Johann, Dr., Mozartstrasse 12,
D-4047 Dormagen(DE)**
Erfinder: **Mersmann, Franz-Josef, Dipl.-Ing., Am
Katterbach 14a, D-5060 Bergisch-Gladbach 2(DE)**
Erfinder: **Obrecht, Werner, Dr., Holderberger
Strasse 108, D-4130 Moers 2(DE)**
Erfinder: **Szentivanyi, Zsolt, Dr., Carl-Rumpff-Strasse 35,
D-5090 Leverkusen 1(DE)**

**Beschreibung**

Die Erfindung betrifft ein Verfahren zur Herstellung von teilhydrierten Nitrilkautschuken mit definierten Restdoppelbindungsgehalten zwischen 2,0 und 5,0 %, vorzugsweise 3,0 und 4,5 %.

Es ist bekannt, z.B. aus EP-A-0134023, die Doppelbindungen von Acrylnitril-butadien-Copolymerisaten (Nitrilkautschuk) zu hydrieren. Man erhält durch die Hydrierung einen besonders hochwertigen Kautschuk, der üblicherweise mit Peroxiden vulkanisiert wird. Es hat sich gezeigt, daß für bestimmte Anwendungsgebiete die vom Nitrilkautschuk bekannte Schwefelvulkanisation vorzuziehen ist. Dazu ist aber erforderlich, daß nicht alle Doppelbindungen des Nitrilkautschuks bei der Hydrierung hydriert werden, sondern daß Restdoppelbindungsgehalte von 2 bis 5 % erhalten bleiben.

Da einerseits mit einem großen Überschuß an Wasserstoff hydriert wird, andererseits aber der Hydrierkatalysator von Ansatz zu Ansatz nicht immer die gleiche Aktivität aufweist, zeigen die hydrierten Produkte hinsichtlich des Restdoppelbindungsbehaltes eine große Abweichung vom vorgegebenen Sollwert, beispielsweise 4 ± 2 %. Zu hoch hydrierte Produkte lassen sich nicht mehr mit Schwefel zu Formkörpern mit ausreichenden Festigkeitseigenschaften vulkanisieren; zu niedrig hydrierte Produkte sind nicht ausreichend alterungsbeständig.

Es wurde nun gefunden, daß man ohne Verlust an Qualität teilhydrierte Nitrilkautschuke mit nur geringer Abweichung vom vorgegebenen Restdoppelbindungsgehalt herstellen kann, wenn man wenigstens zwei teilhydrierte Nitrilkautschuke mit unterschiedlichen Hydriergraden oberhalb und unterhalb des vorgegebenen Sollwertes mischt, und dabei bezüglich der Restdoppelbindungsgehalte der zu mischenden Komponenten bestimmte Grenzen einhält.

Gegenstand der Erfindung ist daher ein Verfahren zur Herstellung von teilhydrierten Nitrilkautschuken mit Restdoppelbindungsgehalten zwischen 2,0 und 5,0 %, vorzugsweise 3,0 und 4,5 %, dadurch gekennzeichnet, daß man wenigstens zwei teilhydrierte Nitrilkautschuke mit Restdoppelbindungsgehalten von 1,5 bis 7,5 %, wobei der Restdoppelbindungsgehalt des einen Nitrilkautschuks oberhalb und der Restdoppelbindungsgehalt des anderen Nitrilkautschuks unterhalb des vorgegebenen Sollwerts liegen, in geeigneten Verhältnissen mischt, wobei teilhydrierte Nitrilkautschuke mit Restdoppelbindungsgehalten von 5 bis 7,5 % zu höchstens 25 Gew.-% Bestandteil der Mischung werden.

Jeder der einzumischenden Kautschuke wird vorzugsweise in einer Menge von mindestens 10 Gew.-% der Gesamtmischung eingesetzt.

Die Nitrilkautschuke enthalten im allgemeinen 85 bis 50 Gew.-%, bevorzugt 82 bis 55 Gew.-%, eine konjugierten Diens, 15 bis 50 Gew.-%, vorzugsweise 18 bis 45 Gew.-%, eines ungesättigten Nitrils und 0 bis 10 Gew.-%, vorzugsweise 0 bis 8 Gew.-% wenigstens eines weiteren mit dem konjugierten Dien und dem ungesättigten Nitril copolymerisierbaren Monomeren.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomer kommen Vinylaromaten wie Styrol, o-, m- oder p-Methylstyrol, Ethylstyrol, Vinylnaphthalin und Vinylpyridin, α,β-ungesättigte Monocarbonsäuren mit 3 bis 5 C-Atomen wie Acrylsäure, Methacrylsäure und Propionsäure sowie α,β-ungesättigte Dicarbonsäuren mit 4 bis 5 C-Atomen wie Malein-, Fumar-, Citracon- und Itakonsäure, ferner Vinylchlorid, Vinylidenchlorid, N-Methylolacrylamid und Vinylalkylether mit 1 bis 4 C-Atomen im Alkylteil in Betracht.

Vorzugsweise verwendet man dimere, teilhydrierte Copolymere aus Butadien und Acrylnitril. Das Molekulargewicht der Polymeren ist nicht kritisch und liegt zwischen 500 und 500,000 g/Mol, bevorzugt zwischen 1000 und 200.000 g/Mol und insbesondere zwischen 30.000 und 150.000 g/Mol (Zahlenmittel, ermittelt durch Gelpermeationschromatographie).

Die Hydrierung kann nach bekannten Verfahren durchgeführt werden.

Die Mischung erfolgt vorzugsweise in Form von Polymerlösungen oder in Form von Polymerlatices. Sie kann aber auch in Substanz auf einem geeigneten Knetaggregat erfolgen.

Zur Herstellung von Formkörpern werden den Polymermischungen Schwefel oder übliche Schwefelspender sowie gegebenenfalls weitere Hilfsmitel und Füllstoffe zugesetzt, beispielsweise Vulkanisationsbeschleuniger, Alterungsschutzmittel, Ruß und Verarbeitungshilfsmittel.

Aufgrund ihrer ausgezeichneten Wetter-, Ozon-, Höhe- und Heißluftbeständigkeit, sowie ihrer Beständigkeit gegenüber kalten Klima können diese Polymere für hochwertige Gummiartikel wie Dichtungen, Schläuche, Membranen, Treibriemen, Kabelisolationen und Kabelmäntel eingesetzt werden.

<u>Beispiele</u>

Es wurden Kautschukmischungen nach folgender Rezeptur hergestellt:
100 Gew.-Teile Kautschuk
30 Gew.-Teile Ruß N 550
5 Gew.-Teile Zinkoxid
7 Gew.-Teile Magnesiumoxid
3 Gew.-Teile Zn-Salz des 2-Mercaptobenzimidazols
1,5 Gew.-Teile styrolisiertes Diphenylamin
0,5 Gew.-Teile Stearinsäure

0,1 Gew.-Teil Schwefelpaste (80 Gew.-% Schwefel), 20 Gew.-% Gemisch von Fettsäuresalzen)
4,5 Gew.-Teile Tetramethylthiuramdisulfid
2,7 Gew.-Teile 2-(4-Morpholinyldithio)-benzothiazol
1,0 Gew.-Teil Dibenzothiazyldisulfid

Dabei kamen folgende Kautschuke zum Einsatz, die alle Acrylnitril-Butadien-Copolymerisate mit 33 Gew.-% Acrylnitril waren:

H-NBR - I mit Restdoppelbindungsgehalt von 3,2 %
H-NBR - II mit Restdoppelbindungsgehalt von 1,4 %
H-NBR - III mit Restdoppelbindungsgehalt von 7,5 %
H-NBR - IV mit Restdoppelbindungsgehalt von 4,0 %
H-NBR - V mit Restdoppelbindungsgehalt von 2,0 %

Es wurden folgende Ergebnisse erzielt

| | 1 | 2 | 3 | 4 | 5 |
|---|---|---|---|---|---|
| H-NBR-I | 100 | – | – | – | – |
| H-NBR-II | – | 70 | 50 | – | – |
| H-NBR-III | – | 30 | 50 | – | 22 |
| H-NBR-IV | – | – | – | 100 | – |
| H-NBR-V | – | – | – | – | 78 |
| Restdoppelbindungsgehalt (%) | 3,2 | 3,2 | 4,4 | 4,0 | 3,2 |
| Mooney scorch 120°C | 37 | 37 | 33 | 37 | 35 |
| Mooney scorch 140°C | – | – | – | – | – |
| Vulkameter t 10 | 4,3 | 4,1 | 4,0 | 4,4 | 4,2 |
| 170°C t 70 | 6,1 | 5,8 | 5,6 | 6,2 | 6,0 |
| t 90 | 6,9 | 6,5 | 6,3 | 6,9 | 6,7 |
| F min | 127 | 443 | 150 | 148 | 146 |
| F max | 4093 | 4080 | 4145 | 4115 | 4044 |
| F max – F min | 3966 | 3937 | 3995 | 3967 | 3898 |
| Vulkanisation 15' | 170°C | 170°C | 170°C | 170°C | 170°C |
| Stab II | | | | | |
| Zugfestigkeit | 32,2 | 30,6 | 28,0 | 32,1 | 31,8 |
| Bruchdehnung | 510 | 500 | 480 | 510 | 500 |
| Spannung 50% | 1,4 | 1,5 | 1,5 | 1,5 | 1,4 |
| Spannung 100% | 2,5 | 2,5 | 2,7 | 2,4 | 2,2 |
| Spannung 150% | 4,0 | 4,4 | 4,6 | 4,0 | 3,7 |
| Struktur Pohle | 174 | 143 | 142 | 146 | 145 |
| Härte 20°C | 64 | 65 | 66 | 65 | 65 |
| Härte 70°C | 64 | 65 | 66 | 65 | 65 |
| Elastizität 20°C | 34 | 33 | 33 | 32 | 34 |
| Elastizität 70°C | 64 | 64 | 64 | 64 | 63 |
| Heißluftalterung 7 + 14 Tage Zellenofen 150°C | | | | | |
| Zugfestigkeit 0 | 32,2 | 30,6 | 28,0 | 32,1 | 31,8 |
| 7 | 23,6 | 22,5 | 19,1 | 24,8 | 23,3 |
| 14 | 22,0 | 24,6 | 20,0 | 23,4 | 22,5 |
| Bruchdehnung 0 | 510 | 500 | 480 | 510 | 500 |
| 7 | 280 | 250 | 200 | 320 | 290 |
| 14 | 180 | 190 | 125 | 195 | 180 |
| Spannung 50% 0 | 1,4 | 1,5 | 1,5 | 1,5 | 1,4 |
| 7 | 3,4 | 4,4 | 4,2 | 3,7 | 3,6 |
| 14 | 5,7 | 7,3 | 7,8 | 5,6 | 5,8 |
| Spannung 100% 0 | 2,5 | 2,5 | 2,7 | 2,4 | 2,2 |
| 7 | 7,7 | 9,3 | 9,2 | 7,8 | 7,5 |
| 14 | 13,5 | 16,6 | 17,4 | 13,8 | 13,7 |
| Spannung 150% 0 | 4,0 | 4,4 | 4,6 | 4,0 | 5,7 |
| 7 | 13,1 | 15,7 | 15,7 | 13,4 | 13,4 |
| 14 | 20,3 | 22,6 | – | 20,2 | 20,8 |
| Härte 20°C 0 | 64 | 65 | 66 | 65 | 65 |
| 7 | 74 | 76 | 77 | 76 | 75 |
| 14 | 80 | 83 | 84 | 82 | 81 |
| Temperung 150°C 6 Stunden | | | | | |
| Compression-set DIN A 2 | | | | | |
| 70 Std/20°C | 18,3 | 19,2 | 18,4 | 19,6 | 20,3 |
| 70 Std/70°C | 44,3 | 44,6 | 42,8 | 46,2 | 47,0 |
| 70 Std/100°C | 69,4 | 69,8 | 67,9 | 73,7 | 69,8 |

## Patentansprüche

1. Verfahren zur Herstellung von teilhydrierten Nitrilkautschuken mit Restdoppelbindungsgehalten zwischen 2,0 und 5,0 %, vorzugsweise 3,0 und 4,5 %, dadurch gekennzeichnet, daß man wenigstens zwei teilhydrierte Nitrilkautschuke mit Restdoppelbindungsgehalten von 1,5 bis 7,5 %, wobei der Restdoppelbindungsgehalt des einen Nitrilkautschuks oberhalb und der Restdoppelbindungsgehalt des anderen Nitrilkautschuks unterhalb des vorgegebenen Sollwerts liegen, in geeigneten Verhältnissen mischt, wobei teilhydrierte Nitrilkautschuke mit Restdoppelbindungsgehalten von 5 bis 7,5 % zu höchstens 25 Gew.-% Bestandteil der Mischung werden.

2. Verfahren nach Anspruch 1, dadurch gekennzeichnet, daß jeder der einzumischenden Kautschuke in einer Menge von mindestens 10 Gew.-% der Gesamtmischung eingesetzt wird.

3. Verfahren nach Anspruch 1, dadurch gekennzeichnet, daß die Nitrilkautschuke 85 bis 50 Gew.-% eines konjugierten Diens, 15 bis 50 Gew.-% eines ungesättigten Nitrils und 0 bis 10 Gew.-% wenigstens eines weiteren mit dem konjugierten Dien und dem ungesättigten Nitril copolymerisierbaren Monomeren enthalten.

## Claims

1. Process for the preparation of partially hydrogenated nitrile rubbers with residual double bond contents of between 2.0 and 5.0%, preferably 3.0 and 4.5%, characterized in that at least two partially hydrogenated nitrile rubbers with residual double bond contents of 1.5 to 7.5%, the residual double bond content of one nitrile rubber being above and the residual double bond content of the other nitrile rubber being below the predetermined set value, are mixed in suitable ratios, at most 25% by weight of partially hydrogenated nitrile rubbers with residual double bond contents of 5 to 7.5% being incorporated in the mixture.

2. Process according to claim 1, characterized in that each of the rubbers to be mixed in is used in a quantity of at least 10% by weight of the total mixture.

3. Process according to claim 1, characterized in that the nitrile rubbers contain 85 to 50% by weight of a conjugated diene, 15 to 50% by weight of an unsaturated nitrile and 0 to 10% by weight of at least one further monomer which is copolymerizable with the conjugated diene and the unsaturated nitrile.

## Revendications

1. Procédé pour la fabrication de caoutchoucs nitriles partiellement hydrogénés ayant des teneurs résiduelles en doubles liaisons comprises entre 2,0 et 5,0%, de préférence entre 3,0 et 4,5%, caractérisé en ce que l'on mélange dans des proportions appropriées au moins deux caoutchoucs nitriles partiellement hydrogénés ayant des teneurs résiduelles en doubles liaisons de 1,5 à 7,5%, dans lesquels la teneur résiduelle en doubles liaisons d'un caoutchouc nitrile est supérieure et la teneur résiduelle en doubles liaisons de l'autre caoutchouc nitrile est inférieure à la valeur théorique fixée au préalable, les caoutchoucs nitriles partiellement hydrogénés ayant des teneurs résiduelles en doubles liaisons de 5 à 7,5% devenant un constituant de 25% en poids au plus du mélange.

2. Procédé selon la revendication 1, caractérisé en ce que chacun des caoutchoucs à mélanger est utilisé en quantité d'au moins 10% en poids du mélange total.

3. Procédé selon la revendication 1, caractérisé en ce que les caoutchoucs nitriles contiennent 85 à 50% en poids d'un diène conjugué, 15 à 50% en poids d'un nitrile insaturé et 0 à 10% en poids d'au moins un autre monomère copolymérisable avec le diène conjugué et le nitrile insaturé.